## Europäisches Patentamt

## European Patent Office

## Office européen des brevets

(19)

(11) Veröffentlichungsnummer: **0 015 413**
**B1**

(12) **EUROPÄISCHE PATENTSCHRIFT**

(45) Veröffentlichungstag der Patentschrift:
**09.02.83**

(51) Int. Cl.³: **B 01 D 53/02**

(21) Anmeldenummer: **80100717.0**

(22) Anmeldetag: **13.02.80**

(54) Druckwechseladsorptionsverfahren zur Zerlegung oder Reinigung von Gasgemischen.

(30) Priorität: **16.02.79 DE 2906057**

(43) Veröffentlichungstag der Anmeldung:
**17.09.80 Patentblatt 80/19**

(45) Bekanntmachung des Hinweises auf die Patenterteilung:
**09.02.83 Patentblatt 83/6**

(84) Benannte Vertragsstaaten:
**AT BE CH DE FR GB IT NL**

(56) Entgegenhaltungen:
**DE-A-1 544 113**
**DE-A-2 631 225**
**DE-C-1 272 891**

(73) Patentinhaber: **Linde Aktiengesellschaft,**
**Abraham-Lincoln-Strasse 21, D-6200 Wiesbaden (DE)**

(72) Erfinder: **Baldus, Wolfgang, Dr., Jaiserstrasse 51,**
**D-8023 Pullach (DE)**

(74) Vertreter: **Schaefer, Gerhard, Dr., Linde**
**Aktiengesellschaft Zentrale Patentabteilung,**
**D-8023 Höllriegelskreuth (DE)**

## Druckwechseladsorptionsverfahren zur Zerlegung oder Reinigung von Gasgemischen

Die Erfindung betrifft ein Druckwechseladsorptionsverfahren zur Zerlegung oder Reinigung von Gasgemischen gemäß dem Oberbegriff des Patentanspruchs 1.

Ein derartiges Verfahren ist aus der DE-C-1 272 891 vorbekannt. Im Ausführungsbeispiel gemäß Fig. 3 sind dort drei gleichberechtigte, zyklisch umschaltbare Hauptadsorber A, B, C sowie ein diesen zugeordneter Hilfsadsorber D vorgesehen. Ein Adsorptionszyklus besteht demnach aus einer Adsorptionsphase, zwei Gleichstromentspannungsphasen, einer Desorptionsphase sowie drei Druckaufbauphasen. Die zeitliche Gliederung ist dabei derart, daß zur gleichen Zeit jeweils einer der Hauptadsorber die Druckaufbauphasen, ein anderer die Gleichstromentspannungsphasen sowie die Desorptionsphase und ein dritter die Adsorptionsphase durchläuft.

Während der ersten Gleichstromentspannungsphase, die jeweils mit der ersten Druckaufbauphase eines anderen Adsorbers identisch ist, wird zwischen die dabei im Druckausgleich stehenden beiden Hauptadsorber der einzige Hilfsadsorber geschaltet, um während der Entspannung desorbierende Komponenten zurückzuhalten. Während der zweiten Gleichstromentspannungsphase wird diesem Hilfsadsorber zusätzlich ein Speicherbehälter nachgeschaltet. Außerdem wird dieses zweite Entspannungsgas mit Hilfe eines Strahlapparates abgesaugt, der mit abgezweigtem Rohgas als Treibmittel betrieben wird. Der so mit dem zweiten Entspannungsgas vermischte Rohgasanteil wird dem entsprechenden Adsorber während der zweiten Druckaufbauphase zugeführt. Während der anschließenden dritten Druckaufbauphase wird der Speicherbehälter mit Hilfe des erwähnten Strahlapparates unter erneuter Verwendung von abgezweigtem Rohgas als Treibmittel evakuiert. Gleichzeitig wird der nunmehr von der Anlage isolierte Hilfsadsorber bis auf etwa Atmosphärendruck abgeblasen.

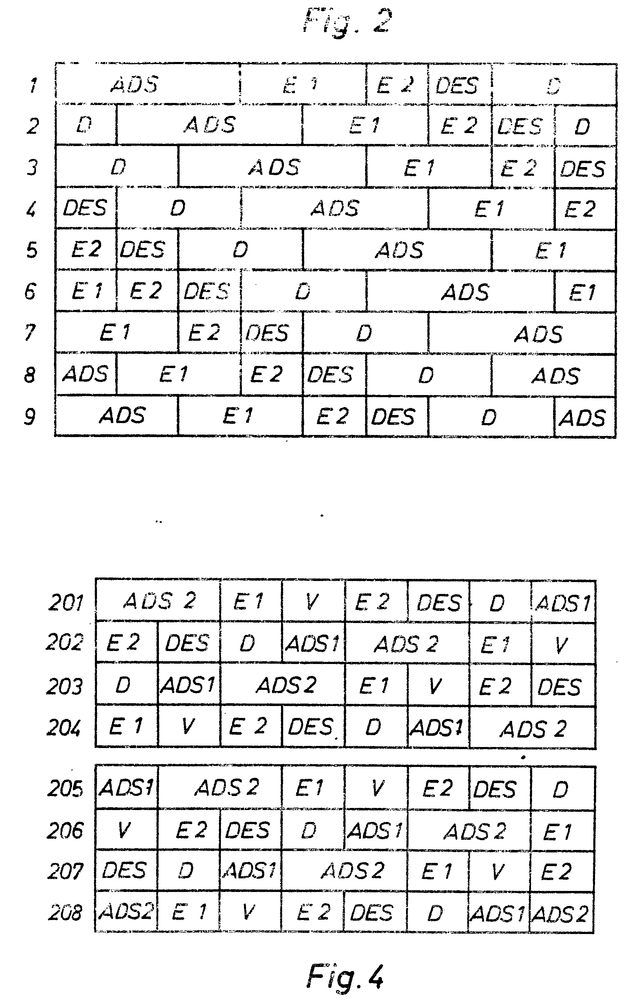

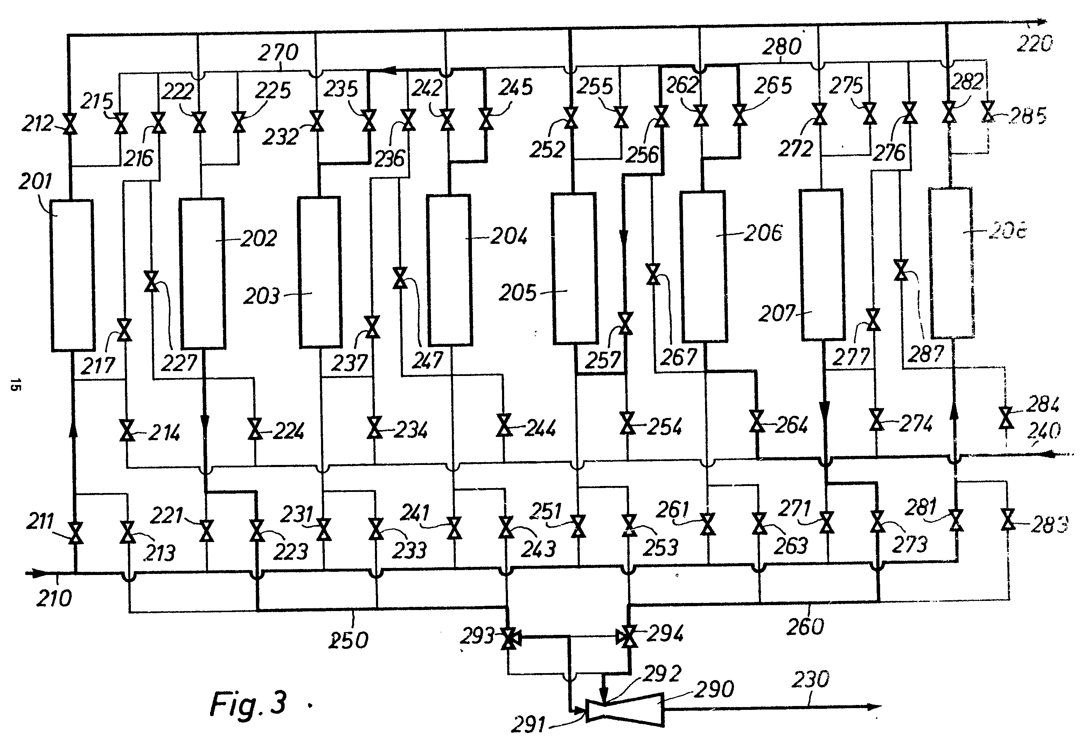

Während der nun folgenden Desorptionsphase wird der Druck im jeweiligen Hauptadsorber bis auf etwa Atmosphärendruck gesenkt. Das dabei abströmende Desorptionsgas dient als Treibmittel für einen weiteren Strahlapparat, mit dessen Hilfe gleichzeitig der Hilfsadsorber evakuiert wird. Der Hauptadsorber kann während dieses ersten Abschnitts der Desorptionsphase lediglich auf einen etwas über Atmosphärendruck liegenden Druck gebracht werden, da der zuletzt genannte Strahlapparat sonst in einen instabilen Betriebsbereich geraten würde. Soll der in der Desorptionsphase befindliche Hauptadsorber auf unteratmosphärischen Druck gebracht werden, so sind offensichtlich weitere Vorkehrungen erforderlich, die in dem hier diskutierten Ausführungsbeispiel allerdings nicht näher bezeichnet sind. Der übrige Inhalt der DE-C-1 272 891 würde es nahelegen, dem Strahlapparat zu diesem Zweck während eines zweiten Teils der Desorptionsphase einen Saugkompressor nachzuschalten, um den entsprechenden Hauptadsorber durch den Strahlapparat hindurch auf unteratmosphärischen Druck abzusaugen. Ein derartiger Kompressor ist dort beispielsweise in Fig. 2 dargestellt, wo er die entsprechende Funktion während der Desorptionsphase ausübt. Damit sind Desorptionsdrücke von ca. 50 Torr erzielbar. Bei dem Verfahren gemäß Ausführungsbeispiel 2, dessen Systemaufbau dem der Fig. 3 ähnelt, liegt der niedrigste in den Hauptadsorbern erzielbare Druck dagegen bei einer Atmosphäre.

Demnach bietet das vorbekannte Verfahren in allen seinen Varianten nur die Alternativen, während der Desorptionsphasen entweder Saugkompressoren bzw. Vakuumpumpen zu verwenden oder auf das Erreichen unteratmosphärischen Druckes zu verzichten. Ein solcher Verzicht ist jedoch nicht ohne Rückwirkung auf das Ergebnis des Verfahrens. Je weniger tief nämlich der Desorptionsdruck gesenkt werden kann, desto niedriger müssen die Reinheitsanforderungen bezüglich des während der Adsorptionsphase abströmenden Produktgases angesetzt werden. Außerdem wird durch einen relativ hohen Desorptionsdruck die Ausbeute an den durch Adsorption abzutrennenden Komponenten, deren Gewinnung oft beabsichtigt ist, in negativer Weise beeinflußt. Aus diesen Gründen ist es wünschenswert, den Desoprtionsdruck soweit wie möglich abzusenken. Dies ist zwar bei Verwendung von Vakuumpumpen oder Saugkompressoren ohne weiteres möglich, jedoch sind damit erhebliche Nachteile verbunden. Zu den mit der Anschaffung dieser Anlagenteile verbundenen Investitionskosten kommen ständige Betriebs- und Wartungskosten. Ein hoher Energieverbrauch sowie ein unvermeidbarer Verschleiß der sich bewegenden Teile müssen in Kauf genommen werden.

Der Erfindung liegt daher die Aufgabe zugrunde, ein Verfahren der eingangs genannten Art bereitzustellen, das es erlaubt, mit möglichst geringem Aufwand möglichst niedrige Desorptionsdrücke zu erzielen, und das somit insgesamt besonders wirtschaftlich ist.

Diese Aufgabe wird mit Hilfe der im kennzeichnenden Teil des Patentanspruchs 1 genannten Maßnahmen gelöst.

Diese Maßnahmen ermöglichen es, unteratmosphärische Desorptionsdrücke zu erreichen, und zwar ohne Verwendung von Vakuumpumpen oder Saugkompressoren. Damit entfällt der zum Betreiben dieser Apparate erforderliche Energieaufwand, während die in den sowieso bereits komprimierten Verfahrensströmen enthaltene Kompressionsenergie optimal genutzt wird. Die erfindungsgemäßen Maßnahmen haben gleichzeitig günstige Auswirkungen auf Produktreinheit und -ausbeute.

Zwar ist die Verwendung von Strahlapparaten, die mit im Verfahren selbst auftretenden Gasströmen betrieben werden, aus der vorgenannten DE-C-1 272 891 an sich bereits bekannt. Die Strahlapparate werden dort jedoch nicht zum Erzeugen niedriger Desorptionsdrücke der gleichberechtigten, zyklisch umschaltbaren Hauptadsorber verwendet. Der eine, mit Rohgas betriebene Strahlapparat dient vielmehr zum Absaugen und Verdichten von Entspannungsgasen zum Zwecke des Druckaufbaus. Die Entspannungsgase befinden sich dabei offensichtlich auf überatmophärischem Druck. Der andere Strahlapparat, durch den während der Desorptionsphasen Desorptionsgase aus den entsprechenden Hauptadsorbern abströmen, dient ersichtlich auch nicht dem Zweck, unteratmophärische Desorptionsdrücke in den Hauptadsorbern zu erzeugen. Die Verwendung dieses Strahlapparates ist vielmehr ausschließlich durch die gleichzeitige Verwendung des Hilfsadsorbers bedingt, und beide Apparate würden beim Übergang zu einem Verfahren gemäß dem Oberbegriff des Patentanspruchs 1 entfallen, da bei einem derartigen Verfahren keine Hilfsadsorber, sondern nur gleichberechtigte, zyklisch umschaltbare, jeweils gleiche Schaltzyklen durchlaufende Adsorber vorgesehen sind. Zudem dient der beim vorbekannten Verfahren während der Desorptionsphase eingesetzte Strahlapparat nicht zum Erzeugen der Desorptionsdrücke in dem entsprechenden Hauptadsorber, diese stellen sich vielmehr aufgrund des noch herrschenden überatmosphärischen Druckes durch einfaches Ausströmen von selbst ein, wobei das Desorptionsgas im Gegensatz zur Erfindung als Treibmittel dient. Für die Erzeugung niedriger, d. h. insbesondere unteratmosphärischer Desorptionsdrücke bei einem Verfahren der eingangs genannten Art gibt die DE-C-1 272 891 demnach keine Lehre.

Für die Auswahl des aus dem Verfahren selbst stammenden Treibmittels stehen verschiedene Alternativen zur Verfügung:

Einmal können als Treibmittel Teilmengen des während der Adsorptionsphasen abströmenden Produktgases bzw. Produktgasgemisches verwendet werden. Dieser Fall wird dann zur Anwendung kommen, wenn weniger die möglichst vollständige Gewinnung des während der Adsorptionsphase abströmenden Produktgases, sondern mehr die Gewinnung bzw. Anreicherung der adsorptiv abgetrennten Komponenten beabsichtigt ist. Denn bekanntlich wird bei Anwendung eines Strahlapparates das Treibmittel mit dem zu fördernden Fluid, im vorliegenden Falle also den desorbierenden Komponenten, vermischt.

Als weitere Möglichkeit zur Bereitstellung des Treibmittels ist vorgesehen, Teilmengen des adsorptiv zu zerlegenden bzw. zu reinigenden Gasgemisches selbst zu verwenden. Dies kann gegenüber dem vorstehend erwähnten Fall sogar von Vorteil sein, nämlich insofern, als der als Treibmittel zu verwendende Anteil gar nicht erst durch den Adsorber geschickt werden muß, und dieser einschließlich der Adsorptionsmittelschüttung somit entsprechend kleiner dimensioniert werden kann.

Kommt es dagegen bei der Durchführung des Adsorptionsverfahrens auf möglichst vollständige Gewinnung der nicht adsorbierten Komponenten, d. h. also des während der Adsorptionsphase abströmenden Produktgases, an, so werden als Treibmittel zweckmäßig während der Entspannungsphasen abströmende Gase oder Gasgemische verwendet. Diese Verfahrensvariante ist bei Druckwechselverfahren mit besonderem Vorteil anwendbar, da diese im allgemeinen mehrere Entspannungsphasen aufweisen, woraus ein besonders hohes Maß an Anpassungsfähigkeit bezüglich der jeweils gegebenen Umstände resultiert. Dabei wird es oft zweckmäßig sein, daß jeweils während der letzten Entspannungsphasen abströmende Gase bzw. Gasgemische als Treibmittel verwendet werden. Diese letzten Entspannungsgase weisen nämlich, in Abhängigkeit von dem jeweils erreichten Enddruck, bereits einen mehr oder weniger großen Anteil an desorbierten Komponenten auf und bieten sich damit als Treibmittel in besonderer Weise an, das sich so eine optimale Ausbeute an den zunächst adsorbierten und dann wieder desorbierten Komponenten ergibt.

Die Anwendung des erfindungsgemäßen Verfahrens verlangt, daß während jeder Desorptionsphase immer ein Treibmittel zur Verfügung steht. Es kann jedoch nicht in jedem Falle damit gerechnet werden, daß während der Desorptionsphasen jederzeit ein als Treibmittel geeigneter Gasstrom anfällt. Bei einem Druckwechselverfahren kann es vorkommen, daß nicht während der gesamten Dauer der Desorptionsphasen gleichzeitig als Treibmittel geeignete Gasströme gewonnen werden. Für diesen Fall ist gemäß einer Weiterbildung der Erfindung vorgesehen, daß die als Treibmittel zu verwendenden Gase oder Gasströme zunächst in Pufferbehältern gesammelt und erst während später ablaufender Desorptionsphasen zum Betreiben der Strahlapparate eingesetzt werden. Die Treibmittel werden demgemäß erst nach Zwischenspeicherung mit entsprechender zeitlicher Verschiebung zur Unterstützung der Desorption eingesetzt.

Es ist auch nicht immer erforderlich, daß ein Strahlapparat mit seiner Saugseite unmittelbar an einen zu desorbierenden Adsorber angeschlossen wird. Die evakuierende Wirkung kann auch durch ausreichend große, auf entsprechend niedrigem Druck befindliche Pufferbehälter ausgeübt werden, die während der Desorptionsphase mit dem zu desorbierenden Adsorber verbunden werden. Demgemäß ist vorgesehen, daß zunächst die Pufferbehälter mit Hilfe der Strahlapparate evakuiert werden, und anschließend aus in der Desorptionsphase befindlichen Adsorbern abströmende Gase oder Gasgemische aufzunehmen. Je größer diese Pufferbehälter sind, desto weniger tief muß der in ihnen herrschende Druck durch Evakuierung mit Hilfe des Treibmittels abgesenkt werden, um noch eine ausreichende Saugwirkung während der Desorption zu behalten.

Das erfindungsgemäße Verfahren ist bei einer Vielzahl unterschiedlich strukturierter Druckwechselverfahren anwendbar. Als Treibmittel geeignete Gasströme fallen dort meist ohne weiteres an, und die Variationsmöglichkeiten in der Verfahrensführung sind außerordentlich groß. Es ist die Möglichkeit zugelassen, daß während der Desorptionsphasen Spülgasströme eingesetzt werden, die dann ebenfalls mit Hilfe von Strahlapparaten abgesaugt werden.

Eine ähnliche Anwendungsbreite besitzt das erfindungsgemäße Verfahren hinsichtlich der zu verwendenden Adsorptionsmittel. Grundsätzlich ist jedes Adsorptionsmittel zugelassen, wenn es nur in der Lage ist, aus dem zu behandelnden Gasgemisch mindestens eine Komponente, deren Abtrennung gewünscht wird, mit ausreichender Selektivität zu adsorbieren. So kommen als Adsorptionsmittel beispielsweise zeolithische Molekularsiebe, Kohlenstoffmolekularsiebe, Silikagel, Aktivkohle oder aktiviertes Aluminiumoxid in Frage.

Hinsichtlich der zu behandelnden Gasgemische unterliegt die Anwendbarkeit des Verfahrens gemäß der Erfindung ebenfalls keinerlei grundsätzlichen Beschränkungen. Als mögliche Anwendungsbeispiele seien hier nur die Sauerstoffanreicherung aus Luft, die Reinigung von Erdgas, die Abtrennung von Wasserdampf und Kohlendioxid aus Luft vor deren Zerlegung durch Tieftemperaturrektifikation, die Feinreinigung von Synthesegasen bezüglich saurer Gase oder die Gewinnung von Reinwasserstoff aus Rohwasserstoff genannt.

Die aus einer Druckwechseladsorptionsanlage abzuführenden Gasströme werden, falls sie nicht in die Atmosphäre abgeblasen werden, zumeist einer besonderen Verwendung zugeführt. Oft sollen beispielsweise während der Regenerierung anfallende Restgase zum Zwecke der Energieerzeugung verbrannt werden. Dazu sind einerseits bestimmte Mindestdrücke erforderlich, andererseits fallen die Restgase, insbesondere die Desorptionsgase, beim vorliegenden Verfahren oft unter relativ niedrigen Drücken an. Die zu verbrennenden Gase müssen daher vor der Einführung in den Brenner auf die erforderlichen Mindestdrücke verdichtet werden. In diesem Zusammenhang ist in Weiterbildung der Erfindung vorgesehen, daß Strahlapparate dazu verwendet werden, aus den Adsorbern abströmende und abzuführende Gasströme auf den bei ihrer beabsichtigten Verwendung benötigten Druck zu verdichten. Gemäß der Erfindung bereits vorhandene Strahlapparate sind demnach so auszulegen, daß die angesaugten Gasströme auf die erwünschten Drücke verdichtet werden können. Damit kann auf die Verwendung eines Gebläses zu dem vorgenannten Zweck entweder ganz verzichtet oder dieses kann kleiner dimensioniert werden.

Diese Verfahrensmöglichkeit wird bevorzugt dann zur Anwendung kommen, wenn als Treibmittel geeignete Gasströme bei konstantem und gleichzeitig ausreichend hohem Druck zur Verfügung stehen. Konstanter Treibmitteldruck liegt gewöhnlich dann vor, wenn abgezweigte Rohgasanteile oder während der Adsorptionsphase abströmende Gase als Treibmittel verwendet werden. Werden Entspannungsgase als Treibmittel eingesetzt, so ist einmal kein konstanter Druck gegeben, und zum anderen dürfte für die meisten Anwendungsfälle die zu Verfügung stehende Druckhöhe nicht ausreichen, um die abgesaugten Gase auf den gewünschten Enddruck zu verdichten. Dann wird es erforderlich sein, dem Strahlapparat zusätzlich ein Gebläse nachzuschalten. Immerhin kann letzteres auch dann noch kleiner dimensioniert werden.

Unter Umständen wird es erforderlich sein, zusätzliche Strahlapparate einzusetzen. Dieser Fall kann beispielsweise eintreten, wenn bereits auf dem höchsten Verfahrensdruck befindliche Gasströme weiter zu verdichten sind. Findet die Adsorption etwa bei relativ niedrigen Drücken statt, und soll das während der Adsorptionsphasen abströmende Gas einer Verwendung bei höherem Druck, etwa einer Verbrennung, zugeführt werden, so müssen zusätzliche Strahlapparate verwendet werden, die mit inerten Fremdgasen als Treibmittel zu betreiben sind.

Als Strahlapparate im Sinne der Erfindung gelten die beispielsweise auch unter den Namen Strahlpumpe oder Ejektor bekannten Vorrichtungen, die nach dem folgenden Prinzip arbeiten: Ein unter erhöhtem Druck stehender Treibmittelstrom wird in einer Düse entspannt bzw. teilentspannt, wobei die Treibmittelmoleküle eine Geschwindigkeits- und damit Impulserhöhung erfahren. Die so beschleunigten Treibmittelmoleküle nehmen innerhalb eines Mischraumes Moleküle des anzusaugenden Mediums durch Impulsübertragung mit. Anschließend wird in einem Diffusor die kinetische Energie teilweise wieder in Druckenergie umgesetzt, so daß ein Mischstrom resultiert, dessen Druck zwischen den ursprünglichen Drücken des Treibmittels und des anzusaugenden Mediums liegt.

Im folgenden wird die Erfindung anhand von in Abbildungen schematisch dargestellten Ausführungsbeispielen näher erläutert:

Fig. 1 zeigt in schematischer Weise ein mit neun Adsorbern betriebenes Verfahren zur Reinigung von Rohwasserstoff,

Fig. 2 zeigt ein zu diesem Verfahren gehörendes Zeitablaufdiagramm,

Fig. 3 zeigt schematisch ein mit zwei Gruppen zu je vier Adsorbern betriebenes Verfahren zur Reinigung eines methanhaltigen Gases,

Fig. 4 zeigt ein zu diesem Verfahren gehörendes Zeitablaufdiagramm,

Fig. 5 zeigt in schematischer Weise ein mit drei Adsorbern betriebenes Verfahren zur Sauerstoffgewinnung aus Luft,

Fig. 6 zeigt ein zu diesem Verfahren gehörendes Zeitablaufdiagramm.

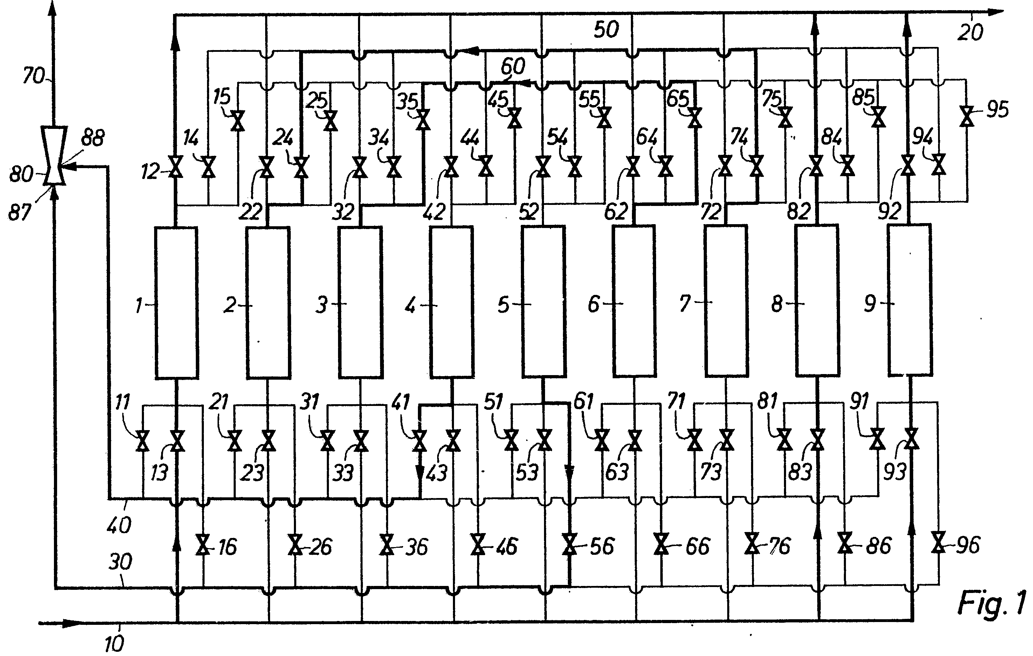

In Fig. 1 sind neun gleichberechtigte, zyklisch umschaltbare und jeweils mit entsprechender Phasenverschiebung gleiche Schaltzyklen durchlaufende Adsorber 1 bis 9 dargestellt. Die Einlaßseiten dieser Adsorber sind über Ventile 13 bis 93 mit einer das Rohgas, in diesem Falle ein stark wasserstoffhaltiges Gasgemisch, heranführenden Zufuhrleitung 10 verbunden. Die Auslaßseiten der Adsorber stehen über Ventile 12 bis 92 mit einer den gereinigten Wasserstoff abführenden Produktgasleitung 20 in Verbindung. Weiterhin sind Druckausgleichsleitungen 50 und 60 für im Gleichstrom betriebene Druckausgleichsphasen vorgesehen, die mit den Auslaßseiten der Adsorber über Ventile 14 bis 94 bzw. 15 bis 95 verbunden sind. Zwei weitere Leitungen 30 und 40 stehen einerseits über Ventile 16 bis 96 bzw. 11 bis 91 mit den Einlaßseiten der Adsorber und andererseits einmal mit der Druckseite 87 und zum anderen mit der Saugseite 88 eines Ejektors 80 in Verbindung. Die Leitung 30 führt Entspannungsgas aus einem jeweils in einer Gegenstrom-Entspannungsphase befindlichen Adsorber ab, das dann als Treibmittel für den Ejektor 80 dient. Durch Leitung 40 wird dabei Desorptionsgas aus einem in der Desorptionsphase befindlichen Adsorber abgesaugt.

Im Zeitlaufdiagramm der Fig. 2 ist jeder der insgesamt neun übereinander angeordneten waagerechten Balken einem der Adsorber 1 bis 9 zugeordnet. Die in Fig. 1 stark ausgezogenen Linien und Pfeile entsprechen dem im Zeitablaufdiagramm ganz links dargestellten Zeitabschnitt, der insgesamt ein Neuntel des gesamten Adsorptionszyklus ausmacht. Dieser Zeitabschnitt ist bereits repräsentativ für die in allen neun Adsorbern mit entsprechender zeitlicher Verschiebung ablaufenden Phasen.

Innerhalb des so in Fig. 1 hervorgehobenen Zeitabschnitts befindet sich der Adsorber 1 im ersten Drittel, der Adsorber 9 im mittleren Drittel und der Adsorber 8 im letzten Drittel der Adsortpionsphase ADS. Alle drei Adsorber werden über Leitung 10 sowie die geöffneten Ventile 13, 93 bzw. 83 mit dem wasserstoffreichen Gasgemisch beaufschlagt. Die zu entfernenden Bestandteile werden innerhalb der Adsorptionsmittelbetten zurückgehalten, so daß durch die geöffneten Ventile 12, 92 und 82 sowie Produktgasleitung 20 hochreiner Wasserstoff abströmt. Währenddessen wird der Adsorber 7, der die Adsorptionsphase gerade durchlaufen hat, in einer ersten Entspannungsphase E1 auf einen ersten Zwischendruck entlastet, wobei vom Austrittsende dieses Adsorbers her über das geöffnete Ventil 74, die Druckausgleichsleitung 50 sowie das geöffnete Ventil 24 der in der zweiten Hälfte seiner Druckaufbauphase D befindliche Adsorber 2 wieder aufgedrückt wird. Der nach Abschluß der Druckaufbauphase erreichte Enddruck entspricht noch nicht dem Adsorptionsdruck, dieser wird vielmehr erst im Laufe der Adsorptionsphase durch Beaufschlagen mit dem wasserstoffreichen Gasgemisch erreicht. Während desselben Zeitabschnittes durchläuft der Adsorber 6 die zweite Hälfte seiner ersten Entspannungsphase E1 im Druckausgleich mit dem in der ersten Hälfte seiner Druckaufbauphase D befindlichen Adsorber 3. Der Druckausgleich erfolgt über das geöffnete Ventil 65, die Druckausgleichsleitung 60 sowie das geöffnete Ventil 35. Die gesamte erste Entspannungsphase E1 wird bezüglich der während der Adsorptionsphase ADS herrschenden Strömungsrichtung im Gleichstrom, die gesamte Druckaufbauphase D dagegen im Gegenstrom vorgenommen.

Der Adsorber 5, der seine erste Entspannungsphase E1 gerade beendet hat, befindet sich währenddessen in der zweiten Entspannungsphase E2 und ist dabei von seiner Einlaßseite her über das geöffnete Ventil 56 sowie die Leitung 30 mit der Druckseite 87 des Ejektors 80 verbunden. Die Saugseite 88 des Ejektors steht gleichzeitig über die Leitung 40 und das geöffnete Ventil 41 mit der Einlaßseite des Adsorbers 4 in Verbindung, der seine Entspannungsstufe E2 gerade abgeschlossen hat und sich nun in seiner Desorptionsphase DES befindet. Es besteht somit eine Druckdifferenz zwischen den Adsorbern 5 und 4, die es erlaubt, das dem Adsorber 5 entströmende zweite Entspannungsgas als Treibmittel für den Ejektor 80 unter gleichzeitiger Ansaugung des aus dem Adsorber 4 abströmenden Desorptionsgases zu benutzen. Der am Ende der zweiten Entspannungsphase E2 erreichte zweite Zwischendruck entspricht demnach dem zu Beginn der Desorptionsphase DES vorliegenden Druck, der sich dann im Verlauf der Desorptionsphase noch erheblich verringert. Das während der Desorptionsphase abgesaugte Desorptionsgas besteht nahezu vollständig aus den während der Adsorptionsphase festgehaltenen Komponenten, während das zweite Entspannungsgas in seiner Zusammensetzung mehr dem zu reinigenden wasserstoffreichen Gasgemisch entspricht, im Vergleich zu diesem allerdings bereits mit desorbierten Komponenten angereichert ist. Dem Ejektor entströmt somit durch Leitung 70 ein stark mit den abzutrennenden Komponenten angereichertes, allerdings immer noch einen gewissen Prozentsatz an Wasserstoff enthaltendes Gas.

Die beschriebene Verwendung des Ejektors während der Desorptionsphase ermöglicht es, ohne weitere Hilfsmittel unteratmophärische Desorptionsdrücke zu erzielen. Dies kommt der Produktreinheit und -ausbeute zugute. Außerdem können wegen der mit der weitergehenden Regenerierung verbundenen höheren spezifischen Beladbarkeit die Adsorber entsprechend kleiner dimensioniert werden.

Als abzutrennende Komponenten aus einem wasserstoffreichen Gasgemisch kommen beispielsweise Methan sowie Kohlenmonoxidreste in Frage. Ein derart zusammengesetztes Gasgemisch resultiert beispielsweise aus einem Kohlevergasungsgas oder einem durch partielle Oxidation von Kohlenwasserstoffen erzeugten Gas nach Konvertierung des Kohlenmonoxids zu Kohlendioxid sowie Auswaschen des letzteren sowie eventuell vorhandener Schwefelverbindungen sowie restlicher Kohlenwasserstoffe mit organischen Lösungsmitteln.

Fig. 3 stellt auf schematische Weise eine mit zwei Adsorbergruppen zu je vier Adsorbern ausgestattete Adsorptionsanlage dar. Mit Hilfe dieser Anlage soll ein methanreiches Gas, vorzugsweise Erdgas, gereinigt werden. Als Produktgas ist hierbei hochreines, gegebenenfalls geringe Kohlenwasserstoffanteile enthaltendes Methan anzusehen, das gleichzeitig die adsorbierte Komponente darstellt. Als Restgas, das in diesem Fall durch die nicht adsorbierte Komponente gebildet wird, strömt im wesentlichen Stickstoff ab.

Zum Heranführen des auf den Adsorptionsdruck verdichteten, methanreichen Gases dient eine Zuführleitung 210, die über Ventile 211, 221 bis 281 mit den Einlaßseiten der Adsorber 201 bis 208 verbunden ist. Das nichtadsorbierte Restgas wird über eine Restgasleitung 220 abgeführt, die über Ventile 212, 222 bis 282 mit den Auslaßseiten der Adsorber in Verbindung steht. Jeder der beiden Adsorbergruppen 201 bis 204 bzw. 205 bis 208 ist je eine Druckausgleichsleitung 270 bzw. 280 sowie eine Produktgasleitung 250 bis 260 zugeordnet. Die Druckausgleichsleitungen 270 bzw. 280 sind über Ventile 215 bis 285 jeweils mit den Auslaßseiten der Adsorber verbunden. Die Produktgasleitungen 250 bzw. 260 sind einerseits über Ventile 213 bis 283 mit den Einlaßseiten der Adsorber und andererseits über Dreiwegventile 293 bzw. 294 entweder mit der Druckseite 291 oder mit der Saugseite 292 eines Ejektors 290 verbunden. Eine Leitung 230 dient schließlich zum Abführen der Produktgase. Weiterhin ist eine Verdrängungsgasleitung 240 vorgesehen, über die den einzelnen Adsorbern während bestimmter Zeitabschnitte Produktgas zugeführt wird. Über Ventile 216, 236, 256, 276 sowie 217 bis 287 können die Einlaßseiten der Adsorber jeweils mit den Druckausgleichsleitungen 270 bzw. 280 verbunden werden.

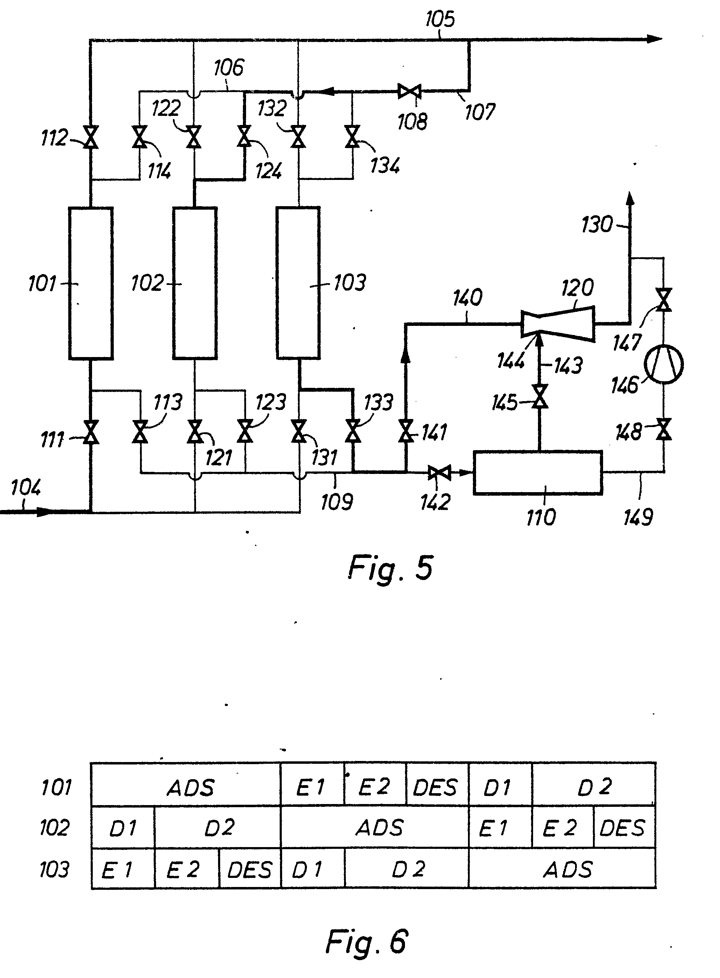

Im Zeitablaufdiagramm der Fig. 4 ist jedem der einzelnen Adsorber 201 bis 208 einer der acht waagerecht übereinander angeordneten Balken zugeordnet. Die Adsorber 201 bis 204 bilden die eine, die Adsorber 205 bis 208 die andere Adsorbergruppe. Das im Zeitablaufdiagramm ganz links dargestellte Achtel eines Adsorptionszyklus ist in Fig. 3 durch stark ausgezogene Linien hervorgehoben. Dieser Zeitabschnitt ist bereits repräsentativ für den gesamten Verfahrensablauf.

Zu Beginn dieses Zeitabschnitts hat der Adsorber 204 gerade seine Adsorptionsphasen durchlaufen und befindet sich somit auf dem höchsten Verfahrensdruck. Er tritt nunmehr in seine erste Entspannungsphase E1 ein und wird dabei auf einen ersten Zwischendruck entladen. Diese erste Entspannung erfolgt bezüglich der während der Adsorptionsphasen herrschenden Strömungsrichtung im Gleichstrom. Das abströmende erste Entspannungsgas, das im wesentlichen die Zusammensetzung des zu reinigenden, methanreichen Gasgemisches aufweist und gegenüber diesem mit Stickstoff angereichert ist, gelangt über das geöffnete Ventil 245, die Druckausgleichsleitung 270 sowie das geöffnete Ventil 235 in den Adsorber 203, der gerade seine Desorptionsphase DES abgeschlossen hat und sich somit auf dem niedrigsten Verfahrensdruck befindet. Der seine Druckaufbauphase D durchlaufende Adsorber 203 wird demnach im Gegenstrom und im Druckausgleich mit dem Adsorber 204 wieder aufgedrückt, wobei sich auch im Adsorber 203 nahezu der bereits erwähnte erste Zwischendruck einstellt.

Währenddessen durchläuft der Adsorber 206, der gerade seine erste Entspannungsphase E1 abgeschlossen hat, seine Verdrängungsphase V. Er wird dabei über Leitung 240 sowie das geöffnete Ventil 264 von seiner Einlaßseite her mit Produktgas, d. h. hochreinem Methan, beaufschlagt, wobei im Lückenvolumen befindliches verbleibendes Restgas verdrängt wird. Dieses gelangt über das geöffnete Ventil 265, die Druckausgleichsleitung 280 sowie die geöffneten Ventile 256 und 257 in den Adsorber 205, der nach Abschluß seiner Druckaufbauphase D nunmehr seine erste Adsorptionsphase ADS1 durchläuft. Hierbei werden alle im verdrängten Restgas enthaltenen Anteile an wieder desorbierten Kohlenwasserstoffen einschließlich Methan sowie eventuell durchbrechende Mengen an Verdrängungsgas adsorbiert. Die Adsorber 205 und 206 befinden sich während der geschilderten Phase auf dem ersten Zwischendruck.

Die Adsorber 205 und 206 werden noch einmal während des fünften Achtels des Desorptionszyklus hintereinandergeschaltet, jedoch in umgekehrter Reihenfolge. Dann befindet sich nämlich der Adsorber 205 in seiner Verdrängungsphase V und der Adsorber 206 in seiner ersten Adsorptionsphase ADS1. Der Strom des Verdrängungsgases bzw. des verdrängten Restgases erfolgt dann über Leitung 240, das geöffnete Ventil 254, durch den Adsorber 205, das geöffnete Ventil 255, die Druckausgleichsleitung 280, die geöffneten Ventile 256 sowie 267 sowie den Adsorber 206. Die verdrängten Restgase, im wesentlichen aus Stickstoff bestehend, strömen während des fünften Achtels durch das geöffnete Ventil 262, während des ersten Achtels durch das geöffnete Ventil 252 in die Restgasleitung 220 ab.

Während des ersten Achtels des Adsorptionszyklus befindet sich der Adsorber 202 in seiner zweiten Entspannungsphase E2, nachdem er zuvor seine Verdrängungsphase V durchlaufen hatte. Zu Beginn dieser zweiten Entspannungsphase ist der Adsorber 202, abgesehen von vernachlässigbar geringen Mengen adsorbierten und damit in der Gasphase im Gleichgewicht stehenden Stickstoffs, ausschließlich mit Methan und geringen Anteilen anderer Kohlenwasserstoffe gefüllt. Nunmehr wird dieser Adsorber von seiner Einlaßseite her über das geöffnete Ventil 223 sowie die Produktgasleitung 250 auf einen zweiten, niedrigeren Zwischendruck entlastet. Die Produktgasleitung 250 ist dabei über das Dreiwegeventil 293 mit der Druckseite 291 des Ejektors 290 verbunden. Das Produktgas dient somit als Treibmittel für den Ejektor 290, dessen Saugseite 292 gleichzeitig über das Dreiwegeventil 294, die Produktgasleitung 260 sowie das geöffnete Ventil 273 mit der Einlaßseite des Adsorbers 207 in Verbindung steht, der sich in seiner Desorptionsphase DES befindet und zuvor seine zweite Entspannungsphase E2 durchlaufen hatte. Es besteht somit ein Druckdifferenz zwischen den Adsorbern 202 und 207; während ersterer nämlich während seiner zweiten Entspannungsphase E2 vom ersten auf den niedrigeren zweiten Zwischendruck entlastet wird, wird letzterer gleichzeitig von dem erwähnten zweiten Zwischendruck auf einen noch niedrigeren Desorptionsenddruck gebracht. Die aus dem in der Desorptionsphase befindlichen Adsorber abgesaugten Gase haben im wesentlichen dieselbe Zusammensetzung wie das als Treibmittel verwendete Gas. Beide werden im Ejektor miteinander vermischt und über Leitung 230 als Produktgas abgezogen. Da der Druck dieses Produktgases im Laufe eines jeden Achtels des Adsorptionszyklus von einem gewissen, relativ höheren Anfangsdruck, der unterhalb des ersten Zwischendruckes liegt, auf einen gewissen, relativ niedrigeren Enddruck, der zwischen dem erwähnten zweiten Zwischendruck und dem Desorptionsenddruck liegt, absinkt, ist zweckmäßig ein Pufferbehälter vorzusehen, der dem zeitlichen Ausgleich dieser Druckschwankungen dient. Aus diesem Pufferbehälter kann auch das Verdrängungsgas abgezogen werden, das dann auf den ersten Zwischendruck rückzuverdichten ist.

Während des hier diskutierten Zeitabschnittes befindet sich der Adsorber 201 in der ersten und der Adsorber 208 in der zweiten Hälfte der jeweiligen zweiten Adsorptionsphase ADS2. Während dieser zweiten Adsorptionsphase tritt ein Druckanstieg von dem erwähnten ersten Zwischendruck auf den Adsorptionsenddruck ein. Die beiden Adsorber werden dabei gleichzeitig über die Zuführleitung 210 sowie die geöffneten Ventile 211 bzw. 281 mit methanreichem Gas beaufschlagt, das zuvor auf den Adsorptionsenddruck verdichtet wurde. Das von den Adsorberenden abströmende Restgas, vorwiegend aus Stickstoff bestehend, wird über die geöffneten Ventile 212 bzw. 282 sowie die Restgasleitung 220 abgezogen.

Auch bei dieser Verfahrensführung ist es ohne weiteres möglich, durch Einsatz von Ejektoren unteratmosphärische Desorptionsdrücke zu erzielen.

In den Figuren 5 und 6 ist ein unter Anwendung der Erfindung betriebenes Verfahren zur adsorptiven Luftzerlegung mit dem Ziel der Gewinnung hochreinen Sauerstoffs dargestellt. Der Stickstoff und die übrigen in der Luft enthaltenen Gaskomponenten sollen in die Atmosphäre abgegeben werden.

Das Verfahren arbeitet mit drei gleichberechtigten, zyklisch umschaltbaren und mit entsprechenden Phasenverschiebungen jeweils gleiche Schaltzyklen durchlaufenden Adsorbern 101, 102 und 103. Diese sind mit ihren Einlaßenden über Ventile 111, 121 und 131 mit einer Zuführleitung 104 verbunden, durch die auf den Adsorptionsdruck verdichtete, zu zerlegende Luft herangeführt wird. Die Auslaßenden der Adsorber stehen über Ventile 112, 122 und 132 mit einer Produktgasleitung 105 in Verbindung, über die hochreiner Sauerstoff abgeführt wird. Weiterhin ist eine Druckausgleichsleitung 106 vorgesehen, die über Ventile 114, 124 und 134 jeweils mit den Auslaßenden der Adsorber verbunden ist. Ein Ejektor 120 ist über eine Leitung 143, die durch ein Ventil 145 absperrbar ist, mit einem Speicherbehälter 110 verbunden. Ejektor und Speicherbehälter stehen über Ventile 141 bzw. 142, eine Leitung 109 und Ventile 113, 123 sowie 133 jeweils mit den Einlaßseiten der Adsorber in Verbindung. Dem Speicherbehälter 110 direkt nachgeschaltet ist eine Vakuumpumpe 146, die bei entsprechender Dimensionierung der Anlage jedoch auch entfallen kann. Die Vakuumpumpe liegt in einer Leitung 149, die durch Ventile 147 und 148 zu beiden Seiten geschlossen werden kann.

Im Zeitablaufdiagramm der Figur 6 ist jedem der drei Adsorber 101, 102 und 103 einer der drei waagerecht übereinander angeordneten Balken zugeordnet. Mit entsprechender Phasenverschiebung sind jeweils identische Schaltzyklen dargestellt. Beginnt demnach die Adsorptionsphase ADS des Adsorbers 101, so treten die Adsorber 102 und 103 gleichzeitig in ihre erste Druckaufbauphase D1 bzw. erste Entspannungsphase E1 ein. Der Adsorber 101 ist dann über geöffnete Ventile 111 und 112 sowohl von seiner Einlaßseite her mit der Zuführleitung 104 als auch von seiner Auslaßseite her mit der Produktgasleitung 105 verbunden. Gleichzeitig findet Druckausgleich zwischen den Adsorbern 102 und 103 statt, und zwar über die Druckausgleichsleitung 106 und die geöffneten Ventile 124 sowie 134. Der Adsorber 103 wird dabei vom zu Beginn herrschenden Adsorptionsdruck auf einen ersten Zwischendruck entlastet. Dies geschieht bezüglich der während der Adsorptionsphase ADS herrschenden Strömungsrichtung im Gleichstrom. Gleichzeitig wird der Adsorber 102 im Gegenstrom auf annähernd den erwähnten ersten Zwischendruck aufgedrückt. Ist dieser Druckausgleichsvorgang beendet, tritt der Adsorber 102 in seine zweite Druckaufbauphase D2 ein, während beim Adsorber 103 eine zweite Entspannungsphase E2 beginnt. Der Adsorber 102 ist jetzt über das geöffnete Ventil 124, die Druckausgleichsleitung 106, das geöffnete Ventil 108 sowie eine Leitung 107 mit der Produktgasleitung 105 verbunden, während das Ventil 134 nunmehr geschlossen ist. Der Adsorber 102 wird demnach durch im Gegenstrom zugeführtes Produktgas, d. h. im vorliegenden Fall hochreinen Sauerstoff, weiter aufgedrückt.

Gleichzeitig wird der Adsorber 103 durch Öffnen des Ventils 133 im Gegenstrom weiter entspannt, wobei mit Stickstoff angereicherte Luft abströmt. Diese wird über Leitung 109, das geöffnete Ventil 141 sowie eine Leitung 140 der Druckseite des Ejektors 120 zugeführt, wo sie als Treibmittel dient. Die Saugseite 144 des Ejektors 120 ist währenddessen über Leitung 143 sowie das geöffnete Ventil 145 mit dem Speicherbehälter 110 verbunden. In diesem befindliches Desorptionsgas, das während einer vorausgehenden Desorptionsphase DES aufgenommen wurde, wird abgesaugt, vereinigt sich mit dem als Treibmittel dienenden zweiten Entspannungsgas und verläßt die Anlage über Leitung 130. Es besteht die Möglichkeit, zum Absaugen des Speicherbehälters 110 zusätzlich die Vakuumpumpe 146 einzusetzen, wozu die Ventile 147 und 148 zu öffnen sind. Die zuletzt geschilderten Maßnahmen dienen dem Zweck, den Speicherbehälter 110 auf einen Druck zu evakuieren, der niedriger ist als der gewünschte Desorptionsdruck. Nach Abschluß der zweiten Entspannungsphase E2 werden die Ventile 141, 145 sowie gegebenenfalls 147 und 148 geschlossen und das Ventil 142 geöffnet. Der nunmehr auf sehr niedrigem Druck befindliche Speicherbehälter 110 übt eine Saugwirkung auf die im Adsorber 103 weiter desorbierenden Komponenten aus, so daß dieser unter Wiederauffüllung des Speicherbehälters während der nunmehr stattfindenden Desorptionsphase DES auf einen sehr niedrigen Desorptionsdruck gebracht werden kann. Das so abgesaugte Desorptionsgas besteht nahezu ausschließlich aus den während der Adsorptionsphase ADS adsorbierten Komponenten, d. h. vorwiegend aus Stickstoff. Das über Leitung 130 während der zweiten Entspannungsphase E2 abströmende Gasgemisch stellt somit sehr stark mit Stickstoff angereicherte Luft dar.

Die in Figur 5 stark ausgezogenen Linien stellen den Zeitabschnitt dar, in dem sich der Adsorber 1 im mittleren Drittel seiner Adsorptionsphase ADS, der Adsorber 102 in der ersten Hälfte seiner zweiten Druckaufbauphase D2 und der Adsorber 103 in seiner zweiten Entspannungsphase E2 befindet.

**Patentansprüche**

1. Druckwechseladsorptionsverfahren zur Zerlegung oder Reinigung von Gasgemischen unter Verwendung mehrerer zyklisch umschaltbarer Adsorber, wobei im Zuge eines Schaltzyklus mindestens je eine Adsorptions-, Entspannungs-, Desorptions- und Druckaufbauphase durchlaufen werden und die Desorption bei niedrigeren Drücken als die Adsorption stattfindet, dadurch gekennzeichnet, daß mehrere gleichartige, jeweils gleiche Schaltzyklen durchlaufende Adsorber verwendet werden, daß die Desorptionsdrücke mit Hilfe von Strahlapparaten erzeugt und als Treibmittel für die Strahlapparate auf höheren als den Desorptionsdrücken befindliche, im Zuge des Verfahrens selbst auftretende Gase oder Gasgemische verwendet werden.

2. Verfahren nach Anspruch 1, dadurch gekennzeichnet, daß als Treibmittel Teilmengen des während der Adsorptionsphasen abströmenden Produktgases bzw. Produktgasgemisches verwendet werden.

3. Verfahren nach Anspruch 1, dadurch gekennzeichnet, daß als Treibmittel Teilmengen des adsorptiv zu zerlegenden bzw. zu reinigenden Gasgemisches selbst verwendet werden.

4. Verfahren nach Anspruch 1, dadurch gekennzeichnet, daß als Treibmittel während der Entspannungsphasen abströmende Gase oder Gasgemische verwendet werden.

5. Verfahren nach Anspruch 4, dadurch gekennzeichnet, daß jeweils während der letzten Entspannungsphasen abströmende Gase bzw. Gasgemische als Treibmittel verwendet werden.

6. Verfahren nach einem der Ansprüche 1 bis 5, dadurch gekennzeichnet, daß die als Treibmittel zu verwendenden Gase oder Gasgemische zunächst in Pufferbehältern gesammelt und erst während später ablaufender Desorptionsphasen zum Betreiben der Strahlapparate eingesetzt werden.

7. Verfahren nach einem der Ansprüche 1 bis 5, dadurch gekennzeichnet, daß mit Hilfe der Strahlapparate zunächst Pufferbehälter evakuiert werden, die anschließend aus in der Desorptionsphase befindlichen Adsorbern abströmende Gase oder Gasgemische aufnehmen.

8. Verfahren nach einem der vorhergehenden Ansprüche, dadurch gekennzeichnet, daß Strahlapparate dazu verwendet werden, aus den Adsorbern abströmende und abzuführende Gasströme auf den bei ihrer beabsichtigten Verwendung benötigten Druck zu verdichten.

**Claims**

1. A pressure alternating adsorption process for separating or purifying gas mixtures using a plurality of cyclically-switchable adsorbers in which, in the course of one switching cycle, at least one adsorption phase, pressure-release phase, desorption phase and pressure build-up phase are passed through, and desorption takes place at lower pressure than adsorption, characterised in that a plurality of identical adsorbers are used each of which participates in an identical switching cycle; that the desorption pressures are produced with the aid of jet devices, gases or gas mixtures which have pressures higher than the desorption pressure and which are formed in the course of the process, are used as drive means for the jet devices.

2. A process according to Claim 1, characterised in that partial amounts of the product gas or product gas mixture flowing off during the adsorption phases are used as drive means.

3. A process according to Claim 1, characterised in that partial amounts of the gas mixture which is to be adsorptively separated or purified are used as drivind means.

4. A process according to Claim 1, characterised in that gases or gas mixtures flowing off during the pressure-release phases are used as drive means.

5. A process according to Claim 4, characterised in that gases or gas mixtures flowing off during the last pressure-release phases are used as drive means.

6. A process according to one of Claims 1 to 5, characterised in that the gases or gas mixtures which are to be used as drive means are first collected in buffer tanks and later used to operate the jet devices during subsequent desorption phases.

7. A process according to one of Claims 1 to 5, characterised in that the jet devices are first used to evacuate buffer containers which subsequently receive gases or gas mixtures flowing from adsorbers in the desorption phase.

8. A process according to one of the preceding Claims, characterised in that jet devices are used to compress gas streams flowing from the adsorbers and gas streams supplied to the adsorbers to the pressures required for their intended uses.

## Revendications

1. Procédé d'adsorption à alternance de pression pour la séparation ou l'épuration de mélanges gazeux en utilisant plusieurs adsorbeurs commutables cycliquement, au moins une étape d'adsorption, une étape de détente, une étape de montée de pression étant effectuées au cours de chaque cycle de commande, et la désorption se déroulant à des pressions plus faibles que l'adsorption, caractérisé en ce qu'on utilise plusieurs adsorbeurs de structure identique en exécutant respectivement des cycles de fonctionnement identiques, en ce que les pressions de désorption sont produites à l'aide d'appareils à jet et en ce qu'on utilise comme agents de propulsion des appareils à jet des gaz ou mélanges gazeux produits au cours du procédé et se trouvant à des pressions supérieures aux pressions de désorption.

2. Procédé selon la revendication 1, caractérisé en ce qu'on utilise comme agents de propulsion des quantités partielles du gaz final ou du mélange gazeux final déchargé pendant les étapes d'adsorption.

3. Procédé selon la revendication 1, caractérisé en ce qu'on utilise comme agents de propulsion des quantités partielles du mélange gazeux à décomposer en ses constituants ou à épurer par adsorption.

4. Procédé selon la revendication 1, caractérisé en ce qu'on utilise comme agents de propulsion des gaz ou mélanges gazeux déchargés pendant les étapes de détente.

5. Procédé selon la revendication 4, caractérisé en ce qu'on utilise comme agents de propulsion des gaz ou mélanges gazeux déchargés pendant les dernières étapes de détente respectives.

6. Procédé selon l'une quelconque des revendications 1 à 5, caractérisé en ce que les gaz ou mélanges gazeux à utiliser comme agents de propulsion sont initialement collectés dans des réservoirs-tampons et sont utilisés pendant des étapes de désorption se déroulant ultérieurement pour faire fonctionner les appareils à jet.

7. Procédé selon l'une quelconque des revendications 1 à 5, caractérisé en ce qu'on assure initialement à l'aide des appareils à jet l'évacuation de réservoirs-tampons qui reçoivent ensuite des gaz ou mélanges gazeux déchargés des adsorbeurs se trouvant dans l'étape de désorption.

8. Procédé selon l'une quelconque des revendications 1 à 7, caractérisé en ce que des appareils à jet sont utilisés pour comprimer des courants de gaz sortant des absorbeurs et à évacuer jusqu'à la pression nécessaire pour leur utilisation ultérieure.

Fig. 1

## Fig. 2

| | | | | |
|---|---|---|---|---|
| ADS | E1 | E2 | DES | D |
| D | ADS | E1 | E2 | DES | D |
| D | ADS | E1 | E2 | DES |
| DES | D | ADS | E1 | E2 |
| E2 | DES | D | ADS | E1 |
| E1 | E2 | DES | D | ADS | E1 |
| E1 | E2 | DES | D | ADS |
| ADS | E1 | E2 | DES | D | ADS |
| ADS | E1 | E2 | DES | D | ADS |

| 201 | ADS 2 | E1 | V | E2 | DES | D | ADS1 |
|---|---|---|---|---|---|---|---|
| 202 | E2 | DES | D | ADS1 | ADS 2 | E1 | V |
| 203 | D | ADS1 | ADS2 | E1 | V | E2 | DES |
| 204 | E1 | V | E2 | DES | D | ADS1 | ADS 2 |

| 205 | ADS1 | ADS 2 | E1 | V | E2 | DES | D |
|---|---|---|---|---|---|---|---|
| 206 | V | E2 | DES | D | ADS1 | ADS 2 | E1 |
| 207 | DES | D | ADS1 | ADS2 | E1 | V | E2 |
| 208 | ADS2 | E1 | V | E2 | DES | D | ADS1 | ADS2 |

## Fig. 4

Fig. 3

0 015 413

Fig. 5

| 101 | ADS | | | E1 | E2 | DES | D1 | D2 | |
|---|---|---|---|---|---|---|---|---|---|
| 102 | D1 | D2 | | ADS | | | E1 | E2 | DES |
| 103 | E1 | E2 | DES | D1 | D2 | | ADS | | |

Fig. 6